# Europäisches Patentamt

(19) **European Patent Office**

**Office européen des brevets**

(11) Veröffentlichungsnummer: **0 007 290**
**B1**

---

(12) **EUROPÄISCHE PATENTSCHRIFT**

(45) Veröffentlichungstag der Patentschrift:
**12.01.83**

(21) Anmeldenummer: **79810063.2**

(22) Anmeldetag: **17.07.79**

(51) Int. Cl.³: **F 41 J 5/02**, G 09 B 5/00

---

(54) **Zielscheibeneinrichtung.**

---

(30) Priorität: **18.07.78 CH 7729/78**

(43) Veröffentlichungstag der Anmeldung:
**23.01.80 Patentblatt 80/2**

(45) Bekanntmachung des Hinweises auf die Patenterteilung:
**12.01.83 Patentblatt 83/2**

(84) Benannte Vertragsstaaten:
**AT BE CH DE FR GB IT LU NL SE**

(56) Entgegenhaltungen:
**DE-A-2 756 210**
**DE-B-1 009 535**
**DE-C- 643 852**
**FR-A- 367 498**
**FR-A- 383 523**
**FR-A- 389 659**
**FR-A-2 268 239**
**US-A-3 453 385**
**US-A-3 838 856**

(73) Patentinhaber: **Laspo AG, Schlattingerbuck,**
**CH-8253 Diessenhofen (CH)**

(72) Erfinder: **Budmiger, Hermann, Mühlmatt 114,**
**CH-4206 Seewen (CH)**

(74) Vertreter: **Schmauder, Klaus Dieter et al, c/o Schmauder**
**& Wann Patentanwaltsbüro Nidelbadstrasse 75,**
**CH-8038 Zürich (CH)**

---

## Zielscheibeneinrichtung

Die Erfindung betrifft eine Zielscheibeneinrichtung gemäss Oberbegriff des Anspruches 1.

Eine Zielscheibeneinrichtung der eingangs genannten Art ist beispielsweise aus der FR-A-2268239 bekannt. Diese Zielscheibeneinrichtung ist mit einer ersten Ermittlungsvorrichtung für getroffene Zielscheibenringe ausgestattet. Hierzu weist die Ermittlungsvorrichtung in einem zweiten Ausführungsbeispiel ein Umlauforgan auf, das mit in radialer Richtung angeordneten Empfangselementen bestückt ist, welche die Zielscheibenringe einer Zielscheibe abtasten. Dieses Ausführungsbeispiel ist nur geeignet, getroffene Zielscheibenringe anzugeben. Hingegen eignet sich die Einrichtung nicht zur Angabe der getroffenen Sektoren der Zielscheibe.

In einem ersten und dritten Ausführungsbeispiel sind auch Zielscheibeneinrichtungen beschrieben, die eine Trefferanzeige in den Sektoren einer Zielscheibe ermöglichen. Hingegen sind diese Vorrichtungen nicht dazu geeignet, auch die getroffenen Zielscheibenringe anzugeben. Die Ausführungsbeispiele der Zielscheibeneinrichtung enthalten Parabolspiegel, welche die auftreffenden Schussimpulse jeweils zu einem Empfänger umlenken. Beim ersten Ausführungsbeispiel ist für die ganze Scheibe ein Parabolspiegel vorhanden, der in vier Sektoren unterteilt ist, wobei jeder Sektor die auftreffenden Schussimpulse zu einem Empfänger umleitet. Beim dritten Ausführungsbeispiel ist für jeden Sektor ein Parabolspiegel vorhanden, die sich überlappend angeordnet sind und die auftreffenden Schussimpulse auf jeweils einen Empfänger im Brennpunkt des Parabolspiegels umlenken. Mit dieser Vorrichtung ist lediglich eine angenäherte Überwachung der Sektoren eines Kreises möglich.

Eine Kombination des ersten und des dritten Ausführungsbeispieles mit dem zweiten Ausführungsbeispiel würde zu einer äusserst komplizierten Einrichtung führen, die überdies nicht in jedem Falle betriebssicher wäre. Zuzüglich zu den Empfängern des zweiten Ausführungsbeispieles würde die Zieleinrichtung zusätzlicher Empfangselemente gemäss dem ersten und dritten Ausführungsbeispiel bedürfen, was zu einer teuren Einrichtung führen würde. Im übrigen müsste das umlaufende Organ des zweiten Ausführungsbeispieles vor der Einrichtung des ersten bzw. dritten Ausführungsbeispieles angeordnet sein. Damit würde sich der weitere Nachteil ergeben, dass das umlaufende Organ den Parabolspiegel der dahinterliegenden Einrichtung stets teilweise überdekken würde, sodass unter Umständen der Schussimpuls bereits durch das umlaufende Organ abgefangen wird und nicht mehr bis zum dahinterliegenden Parabolspiegel gelangen kann, wodurch eine Sektoranzeige verunmöglicht würde. Im übrigen ist es mit den Einrichtungen des ersten bzw. dritten Ausführungsbeispieles nicht möglich, eine Kreisfläche in eine grössere Zahl von Sektoren zu unterteilen. Im Falle des zweiten Ausführungsbeispieles würden die Sensoren durch Impulse beeinflusst, die in Nachbarbereichen auftreffen. Beim dritten Ausführungsbeispiel der Einrichtung würde sich der Fehlstellenbereich weiter erhöhen.

Die Aufgabe der Erfindung liegt darin, eine Zielscheibeneinrichtung zum simulierten Schiessen mit einer Schussimpulse abgebenden Waffe zu schaffen, mit der nicht nur getroffene Zielscheibenringe, sondern auch Zielscheibensektoren auf einfachste und zuverlässige Weise überwacht werden können, wobei insbesondere eine feine Unterteilung einer Zielscheibe in eine grosse Zahl von Sektoren möglich sein soll und wobei weiter die Einrichtung einen einfachen Aufbau aufweisen soll.

Diese Aufgabe wird durch die kennzeichnenden Merkmale des Anspruches 1 gelöst. Dadurch, dass die Umlaufzeit des Empfängers gleich oder kleiner als die Schussimpulsdauer ist, wird zunächst sichergestellt, dass jeder Schussimpuls auch tatsächlich erfasst werden kann. Dadurch, dass am Umlauforgan der ersten Ermittlungsvorrichtung Signalmittel angeordnet sind, die von ortsfesten Signallesemitteln gelesen werden, ist die zweite Ermittlungsvorrichtung von der ersten Ermittlungsvorrichtung insofern unabhängig, als die zweite Ermittlungsvorrichtung keine Empfangselemente für Schussimpulse aufweisen muss, sondern die Signalmittel und die Signallesemittel völlig anderer Art und insbesondere einfacherer Art sein können. Damit ist eine Vereinfachung der Einrichtung gegeben. Die Signalmittel und die Signallesemittel ermöglichen insbesondere auch eine sehr feine Unterteilung der Zielscheibeneinrichtung in eine grosse Anzahl von Sektoren, so dass eine sehr genaue und zuverlässige Anzeige der Treffer nicht nur hinsichtlich der Zielscheibenringe, sondern auch hinsichtlich der getroffenen Sektoren möglich ist.

Die erfindungsgemässe Zielscheibeneinrichtung gestattet somit trotz einfachsten und betriebssicheren Aufbaus eine sehr wirklichkeitsgetreue Simulierung des Schiessens mit einer Waffe.

Anspruch 6 definiert eine besonders einfache Ausbildung der Zielscheibeneinrichtung, da die Empfangselemente ortsfest angeordnet sind und lediglich der Spiegelstreifen rotiert, so dass sich keine Schwierigkeiten bei der Übermittlung der Signale an das Auswertegerät ergeben. Hingegen müssen die Empfangselemente so ausgebildet sein, dass sie am ganzen Umfang Schussimpulse empfangen können.

Eine Ausbildung der Zielscheibeneinrichtung nach Anspruch 9 gestattet es, einfache Empfangselemente zu verwenden, die nur einen punktförmigen Wirkungsbereich zu haben brauchen.

Hingegen ergeben sich Schwierigkeiten mit der Übertragung der Signale der Empfangselemente vom Umlauforgan an ortsfeste Elemente. Dabei ist eine Ausbildung nach Anspruch 7 von Vorteil, da nicht für jedes Empfangselement eine Übertragungsvorrichtung erforderlich ist, sondern die Signale mehrerer Empfangselemente zusammengefasst und über eine geringere Zahl von Übertragungsvorrichtungen übertragen werden können. Dabei ist weiter eine Ausbildung der Zielscheibeneinrichtung nach Anspruch 8 von Vorteil, die es gestattet, die Übertragung der Signale nur an einer Stelle des Umlaufweges vorzunehmen, so dass sich eine einfachere Ausbildung der Übertragungsvorrichtung ergibt. Dabei ist beispielsweise eine Übertragungsvorrichtung nach Anspruch 10 von Vorteil.

Es ist auch eine fortlaufende Übertragung der Signale möglich, wodurch sich der apparative Aufwand vereinfachen lässt. Die fortlaufende Übertragung kann durch umlaufende Kollektoren geschehen. Die Übertragung lässt sich durch Verwendung mehrerer paralleler Kollektoren verbessern.

Besonders vorteilhaft ist eine berührungslose Übertragung der Signale, die beispielsweise nach Anspruch 12 erfolgen kann. Besonders vorteilhaft ist jedoch eine Ausbildung nach Anspruch 11, da sie mit einfachsten Mitteln eine wirkungsvolle störungsfreie Übertragung gestattet.

Anspruch 3 umschreibt eine besonders vorteilhafte zweite Ermittlungsvorrichtung, die eine hohe Zahl von zu erfassenden Zielscheibensektoren ermöglicht. Dabei können die Sender zum Ausgeben der Sektorsignale verschiedenartig ausgebildet sein. So können die Sender beispielsweise Permanentmagnete sein, die von einer Induktionsspule als Empfänger abgetastet werden. Eine besonders einfache Ausbildung ergibt sich, wenn als Sender helle Farbstriche verwendet werden, die sich von einem dunklen Hintergrund abheben und somit Licht reflektieren, das von einem Fototransistor als einem besonders einfachen Empfänger ermittelt werden kann. Eine besonders einfache zweite Ermittlungsvorrichtung, die eine direkte Zuordnung des jeweiligen Sektors zum getroffenen Ring ermöglicht, ist in Anspruch 4 umschrieben. Dabei ist eine Ausbildung nach Anspruch 2 besonders einfach und wirkungsvoll.

Die Stromversorgung der Empfangselemente kann durch Schleifringe erfolgen. Auch eine induktive Stromzuführung analog der Ausbildung nach Anspruch 12 ist möglich.

Eine besonders vorteilhafte Ausgestaltung der Zielscheibeneinrichtung ist in Anspruch 13 definiert. Die Lichtleiter ermöglichen eine einfache Erfassung und Weiterleitung eines durch einen Schussimpuls gegebenen Lichtsignales, wobei die Einflüsse von Fremdlicht besonders gering sind und durch die Anordnung eines Interferenzfilters weiter verringert werden können. Die Übertragung des Lichtsignals durch die Lichtleiter über die Übertragungsvorrichtungen zu einem ortsfesten Teil erfolgt einfach und insbesondere ohne jegliche elektrische Übertragungsmittel, die zu Störungen Anlass geben könnten. Dabei ist es von Vorteil, wenn die Zielscheibeneinrichtung nach Anspruch 14 ausgebildet ist, so dass sowohl die Erfassung der Ringe wie der Sektoren der Zielscheibe sichergestellt ist. Die Ausgestaltung der ersten Ermittlungsvorrichtung erfolgt vorzugsweise nach Anspruch 15. Der Ringraum kann durch eine Nut in einer Bohrung eines Lagers oder einer Buchse des ortsfesten Teiles erfolgen. Vorteilhafterweise ist er jedoch gemäss Anspruch 16 ausgebildet. Der im Querschnitt bogenförmige Nutengrund ermöglicht eine sichere Weiterleitung des Lichtsignales durch weitere Bündelung bei der Reflexion im Ringraum. Zur Erfassung des Sektors eines Treffers ist die Ausgestaltung der Zielscheibeneinrichtung nach Anspruch 5 von Vorteil. Der infolge des kleinen Querschnittes eines Lichtleiters kleine Erfassungsbereich kann durch eine Ausgestaltung nach Anspruch 17 vergrössert werden.

Ausführungsbeispiele der erfindungsgemässen Zielscheibeneinrichtung werden nachfolgend anhand schematischer Zeichnungen näher beschrieben, dabei zeigen:

Fig. 1 eine Zielscheibeneinrichtung in Ansicht auf die Zielscheibe;

Fig. 2 die Zielscheibeneinrichtung in Fig. 1 im Vertikalschnitt und im Ausschnitt;

Fig. 3 das Schaltschema der Zielscheibeneinrichtung der Fig. 1;

Fig. 4 eine weitere Zielscheibeneinrichtung im Vertikalschnitt und im Ausschnitt;

Fig. 5 das Schaltschema der Zielscheibeneinrichtung der Fig. 4;

Fig. 6 eine weitere Zielscheibeneinrichtung im Vertikalschnitt und im Ausschnitt;

Fig. 7 eine zweite Ermittlungsvorrichtung in Draufsicht auf das Umlauforgan;

Fig. 8 die zweite Übermittlungseinrichtung der Fig. 7 im Vertikalschnitt; und

Fig. 9 eine Übertragungsvorrichtung an der Welle eines Umlauforganes im Vertikalschnitt und im Ausschnitt.

Fig. 10 eine Zielscheibeneinrichtung mit Lichtleiter aufweisenden Empfängern in Ansicht auf die Zielscheibe;

Fig. 11 die Zielscheibeneinrichtung der Fig. 10 im Vertikalschnitt und im Ausschnitt;

Fig. 12 die Übertragungsvorrichtung der ersten Ermittlungsvorrichtung im Vertikalschnitt und in grösserem Massstab; und

Fig. 13 die Zielscheibeneinrichtung der Fig. 11 im Schnitt XIII–XIII.

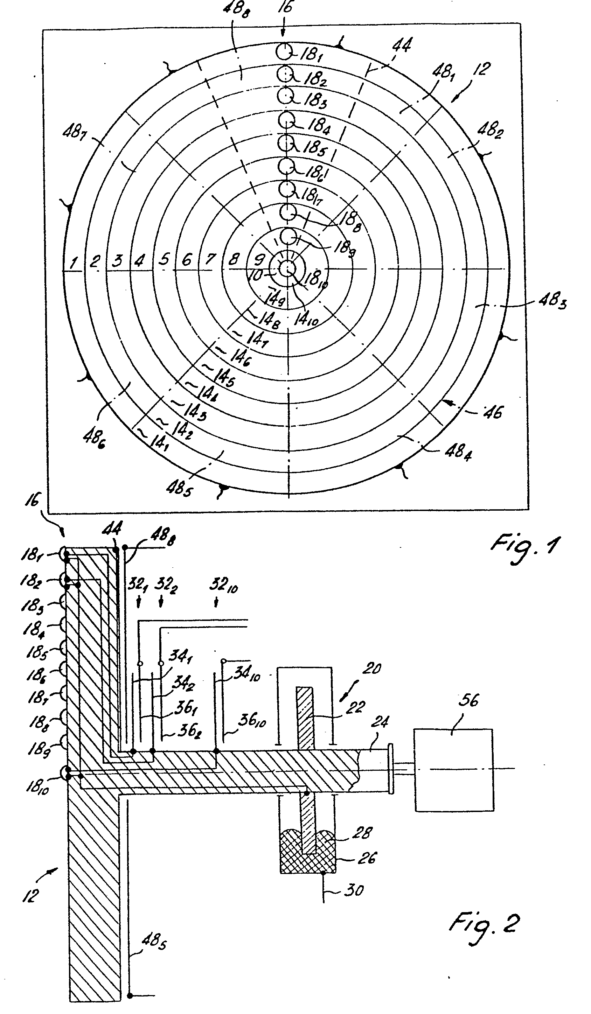

Die Fig. 1 bis 3 zeigen eine erste Zielscheibeneinrichtung zum simulierten Schiessen mit einer Schussimpulse abgebenden Waffe. Diese Zielscheibeneinrichtung enthält ein scheibenförmiges Umlauforgan 12, welches die Zielscheibenringe $14_1$–$14_{10}$ aufgedruckt enthält. Weiter weist das Umlauforgan 12 einen Empfänger 16 für die Schussimpulse auf, der aus einzelnen längs eines Radialstrahles angeordneten Empfangselementen 18, beispielsweise Fototransistoren, gebildet ist. Dabei ist jedem Zielscheibenring $14_1$–$14_{10}$ ein Empfangselement $18_1$–$18_{10}$ zugeordnet. Der Empfänger bildet eine erste Ermittlungsvorrichtung für getroffene Zielscheibenringe. Die Empfangselemente $18_1$–$18_{10}$ werden von einer Übertragungsvorrichtung 20 mit Strom versorgt, die eine Kontaktscheibe 22 aufweist, welche mit der Welle 24 des Umlauforganes 12 fest verbunden ist und in ein ortsfestes Bad 26 taucht, das eine leitende Flüssigkeit 28 enthält, die vorzugsweise aus Quecksilber besteht. In das Bad 26 mündet eine Zuleitung 30. Die Empfangselemente $18_1$–$18_{10}$ sind überdies mit Übertragungsvorrichtungen $32_1$–$32_{10}$ verbunden, die aus mit der Welle 24 verbundenen Kondensatorplatten $34_1$–$34_{10}$ bestehen, welche mit ortsfesten Kondensatorplatten $36_1$–$36_{10}$ zusammenwirken. Die Übertragungsvorrichtungen $32_1$–$32_{10}$ sind mit einem Auswertgerät 40 verbunden, an das seinerseits ein Trefferanzeigegerät 42 angeschlossen ist, das beispielsweise als Bildschirm ausgebildet ist.

Die Zielscheibeneinrichtung enthält eine zweite Ermittlungsvorrichtung, die die Stellung des umlaufenden Empfängers 16 beim Auftreffen eines Schussimpulses ermittelt. Diese zweite Ermittlungsvorrichtung weist eine auf der Rückseite des Umlauforganes 12 angeordnete Kondensatorplatte 44 auf, die mit dem Umlauforgan umläuft. Die Grösse der Kondesatorplatte entspricht einem zu erfassenden Zielscheibensektor 46. Im vorliegenden Beispiel ist die Zielscheibe in acht Zielscheibensektoren unterteilt, die jeweils einen Winkel von 45° einschliessen. Diese umlaufende Kondensatorplatte 44 wirkt mit feststehenden Kondensatorplatten $48_1$–$48_8$ zusammen, deren Grösse und Lage den tatsächlichen Zielscheibensektoren 46 entspricht. Die feststehenden Kondensatorplatten $48_1$–$48_8$ sind ebenfalls mit dem Auswertgerät 40 verbunden.

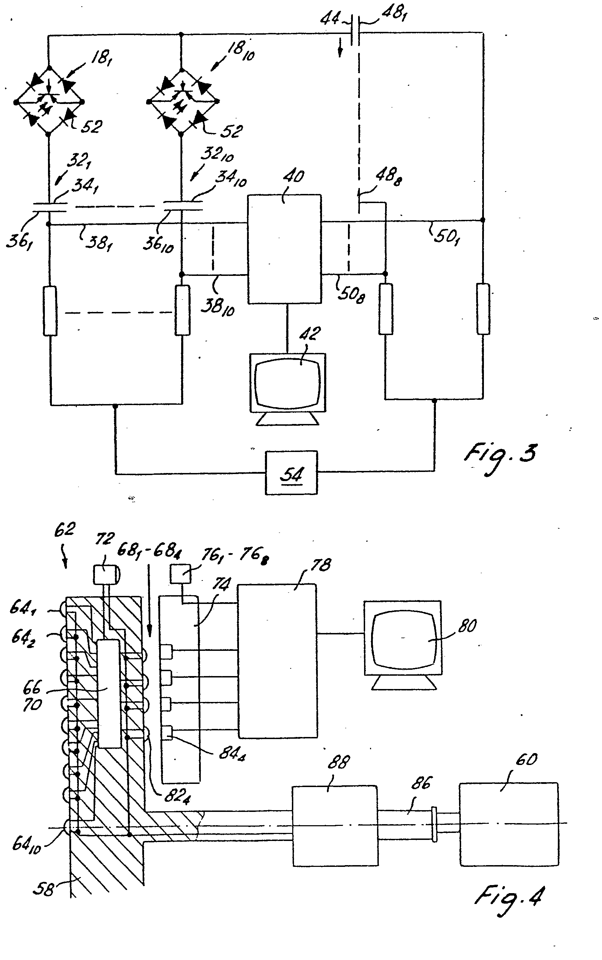

Das Schaltbild der Fig. 3 zeigt die Ausbildung der Empfangselemente $18_1$–$18_{10}$ als Fototransistoren, die in Brückenschaltungen mit Dioden 52 angeordnet sind und bei Auftreffen eines Schussimpulses leitend werden und somit die Stromverbindung im Schaltkreis herstellen. Die Empfangselemente $18_1$–$18_{10}$ sind jeweils in Reihe geschaltet mit den Übertragungselementen $32_1$–$32_{10}$ aus den rotierenden Kondensatorplatten $34_1$–$34_{10}$ und den feststehenden Kondensatorplatten $36_1$–$36_{10}$. Die einzelnen Glieder aus Empfangselementen und Übertragungsvorrichtungen sind untereinander parallel geschaltet und gemeinsam mit der zweiten Ermittlungsvorrichtung für die Zielscheibensektoren in Reihe geschaltet. Ein Hochfrequenzgenerator 54, beispielsweise ein Schwingquarz, dient zum Antrieb der Schaltung. Die feststehenden Kondensatorplatten $36_1$–$36_{10}$ der Übergungsvorrichtung für die Zielscheibenringsignale und die feststehenden Kondensatorplatten $48_1$–$48_8$ der Übertragungsvorrichtung für die Zielscheibensektorsignale sind jeweils über die Ableitungen $38_1$–$38_{10}$ und die Ableitungen $50_1$–$50_8$ mit dem Auswertgerät 40 verbunden, an das seinerseits das Trefferanzeigegerät 42 angeschlossen ist.

Ein mit der Welle 24 verbundener Antriebsmotor 56 treibt das Umlauforgan 12 an. Die Umdrehungszahl beträgt dabei beispielsweise 3000 bis 4000 Umdrehungen/Minute. Dies entspricht einer Umlaufzeit des Umlauforganes von 0,02 bis 0,015 Sekunden/Umdrehung. Die Dauer eines Schussimpulses beträgt beispielsweise 0,020 Sekunden, so dass die Umlaufzeit des Umlauforganes 12 und damit des Empfängers 16 gleich oder kleiner ist als die Schussimpulsdauer.

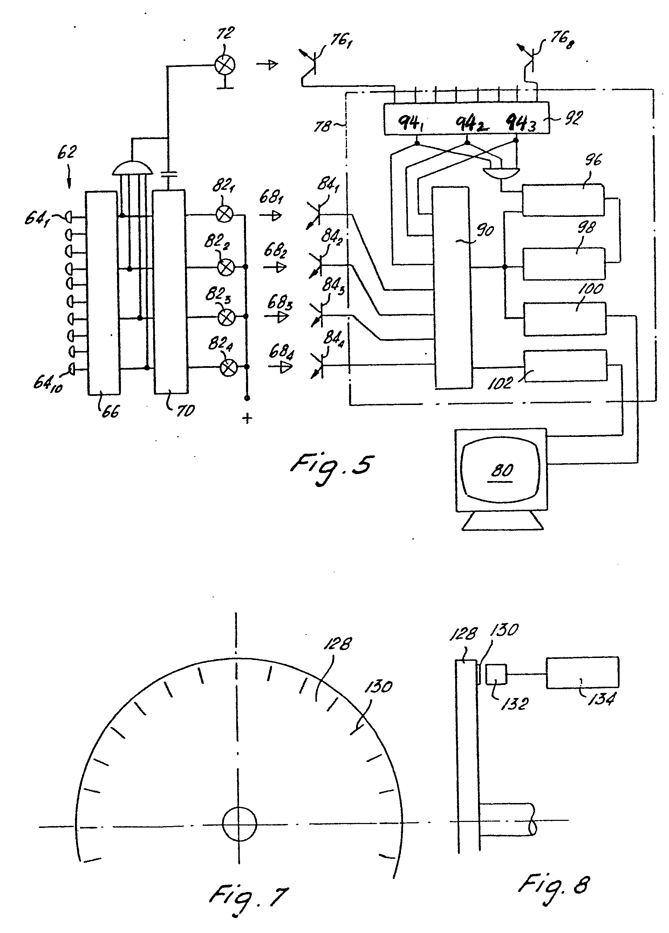

Die Fig. 4 und 5 zeigen eine weitere Zielscheibeneinrichtung mit einem scheibenförmigen Umlauforgan 58, das von einem Antriebsmotor 60 angetrieben wird. Das Umlauforgan enthält einen Empfänger 62 für Schussimpulse, der wiederum analog dem oben beschriebenen Ausführunsbeispiel mit Empfangselement $64_1$–$64_{10}$ versehen ist, die längs eines Radialstrahles angeordnet sind. Die Empfangselemente sind mit einer Kodiervorrichtung 66 verbunden, die die Signale der Empfangselemente kodiert, so dass zur Übertragung der Signale nur vier Übertragungsvorrichtungen $68_1$–$68_4$ erforderlich sind. Ferner enthält das Umlauforgan einen Speicher 70, der die zu übermittelnden Signale festhält, bis sie übermittelt werden können, dann werden sie wieder gelöscht.

Neben der oben erwähnten ersten Ermittlungsvorrichtung für getroffene Zielscheibenringe enthält das Umlauforgan noch einen Sender 72, der mit jedem Empfangselement $64_1$–$64_{10}$ verbunden ist und Strahlen, beispielsweise Lichtstrahlen, aussendet, sobald ein Empfangselement von einem Schussimpuls getroffen ist. An einem feststehenden Element 74 der Zielscheibeneinrichtung sind eine der zu erfassenden Zielscheibensektoren entsprechende Anzahl Empfänger 76 angeordnet, um die von dem Sender 72 ausgesandten Strahlen zu erfassen und an ein Auswertgerät 78 weiterzugeben, das seinerseits mit einem Trefferanzeigegerät 80 verbunden ist, welches als Bildschirm ausgebildet ist.

Die Übertragungsvorrichtungen $68_1$–$68_4$ für die kodierten Zielscheibenringsignale weisen jeweils einen Sender $82_1$–$82_4$ auf, die mit Empfängern $84_1$–$84_4$ am feststehenden Element 74 zusammenwirken. Da die Empfänger nur an einer Stelle angeordnet sind und nicht längs der ganzen Umlaufbahn, kann eine Übertragung der Zielscheibenringsignale nur an einer bestimmten Stelle erfolgen, wenn die Sender $82_1$–$82_4$ mit den Empfängern $84_1$–$84_4$ in Übereinstimmung sind. Der Speicher 70 sorgt dafür, dass die von den Schussimpulsen erzeugten Signale bis zur Übermittlung der Signale erhalten bleiben. Dann werden die Signale im Speicher 70 gelöscht.

Zur Versorgung der am umlaufenden Organ 58 angeordneten Bauteile dient ein auf der Welle 86 des Umlauforganes 58 angeordneter Dynamo 88, wodurch zu Störungen Anlass gebende Übergungselemente für die Stromzuführung entfallen.

Wie insbesondere aus Fig. 5 hervorgeht, enthält das Auswertgerät 78 ein Schieberegister 90, an das die Empfänger $84_1$–$84_4$ der Übertragungsvorrichtungen $68_1$–$68_4$ angeschlossen sind. Weiter enthält das Auswertgerät 78 eine Kodiervorrichtung 92, an die die Empfänger $76_1$–$76_8$ der zweiten Ermittlungsvorrichtung für die Zielscheibensektorsignale angeschlossen sind. Die Ausgänge $94_1$–$94_3$ sind einerseits mit dem Schieberegister 90 und andererseits mit einem Zählwerk 96 verbunden. Letzteres ist seinerseits mit einem Taktgeber 98 gekoppelt, der einerseits das Schieberegister 90 triggert und andererseits mit einem Multivibrator 100 verbunden, der an das Trefferanzeigegerät 80 angeschlossen ist. Das Schieberegister ist an einen zweiten Multivibrator 102 angeschlossen, der seinerseits mit dem Trefferanzeigegerät 80 verbunden ist.

Die Fig. 6 zeigt eine weitere Zielscheibeneinrichtung, die einen Empfänger 104 aufweist, der einen umlaufenden Spiegelstreifen 106 enthält. Letzterer ist um 45° zur Zielscheibenachse 108 geneigt und wird durch einen Antriebsmotor 110 und ein Zahnradgetriebe 112 in Drehung versetzt. Der Spiegelstreifen 106 dient zur Umlenkung ankom- mender Schussimpulse 114 gegen Empfangsele- mente $116_1$–$116_9$, die längs der Zielscheibenachse 108 angeordnet sind. Das Empfangselement $116_{10}$ für den Zehnerring der Zielscheibe ist an der Stirnseite der Zielscheibenachse 108 angeordnet und wird direkt beaufschlagt. Die Empfangselemente sind wiederum mit einem Auswertgerät 118 verbunden, an das ein Trefferanzeigegerät 120 angeschlossen ist.

Neben der oben beschriebenen ersten Übermittlungsvorrichtung für Zielscheibenringsignale weist die Zielscheibeneinrichtung noch eine zwei- te Ermittlungsvorrichtung für Zielscheibensektor- signale auf. Diese enthält an einem feststehenden trichterförmigen Schirm 122 angeordnete Emp- fänger $124_1$–$124_8$, die mittels eines Senders 126 beaufschlagt werden, der an dem umlaufenden Spiegelstreifen 106 angeordnet ist. Dieser Sender 126 kann beispielsweise aus einem Blechstreifen bestehen, der Empfänger 124 aktiviert, welche beispielsweise Näherungsinitiatoren sind. Die Empfänger $124_1$–$124_8$ sind ebenfalls mit dem Auswertgerät 118 verbunden.

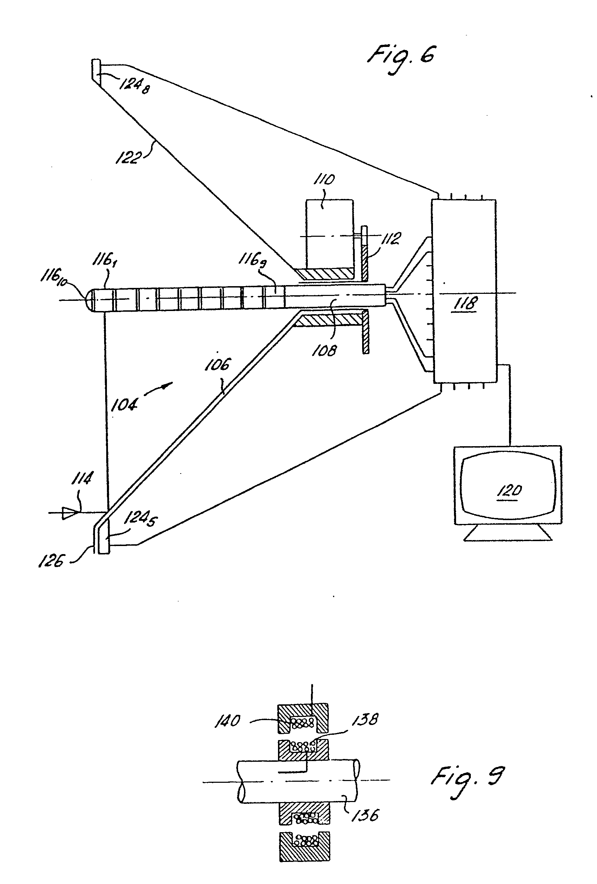

Die Fig. 7 und 8 zeigen ein weiteres Ausfüh- rungsbeispiel einer zweiten Ermittlungsvorrich- tung für Zielscheibensektorsignale. Diese Ermitt- lungsvorrichtung weist wiederum ein Umlaufor- gan 128 auf, das scheibenförmig ausgebildet ist und eine der Zahl der zu erfassenden Zielscheibensektoren entsprechende Zahl von Sendern 130 für Sektorsignale aufweist. Diese Sender wirken mit einem ortsfesten Empfänger 132 zusammen, der mit einem am Ende jeder Umdrehung des Umlauforganes 128 gelöschten Zählwerk 134 verbunden ist. Das Zählwerk ist beispielsweise als Schieberegister ausgebildet. Die Zählung des Zählwerkes 134 wird unterbrochen, wenn auf das Zählwerk ein Zielscheibenringsignal einwirkt. Die Sender 130 sind beispielsweise helle Farbstreifen, die auf einem dunklen Untergrund des Umlauforganes 128 angeordnet sind und von einem als Fototransistor ausgebildeten Empfänger 132 registriert werden können.

Die Fig. 9 zeigt eine kontaktlose Übertragungsvorrichtung, die einerseits zur Stromversorgung und andererseits zur Übertragung von Signalen verwendet werden kann. Diese Übertragungsvorrichtung enthält eine an der Welle 136 eines Umlauforganes koaxial angeordnete Induktionsspule 138, die mit der Welle rotiert und über der eine zweite ortsfeste Induktionsspule 140 koaxial angeordnet ist. Die feststehende Induktionsspule 140 dient als Primärwicklung und wird beispielsweise mit einem hochfrequenten Strom gespeist. Die an der Welle 136 angeordnete Induktionsspule 138 dient als Sekundärwicklung und steht mit nicht näher dargestellten Empfangselementen in Verbindung, die beispielsweise Fototransistoren sind, welche als Schalter wirken und beim Auftreffen eines Schussimpulses einen Stromkreis schliessen.

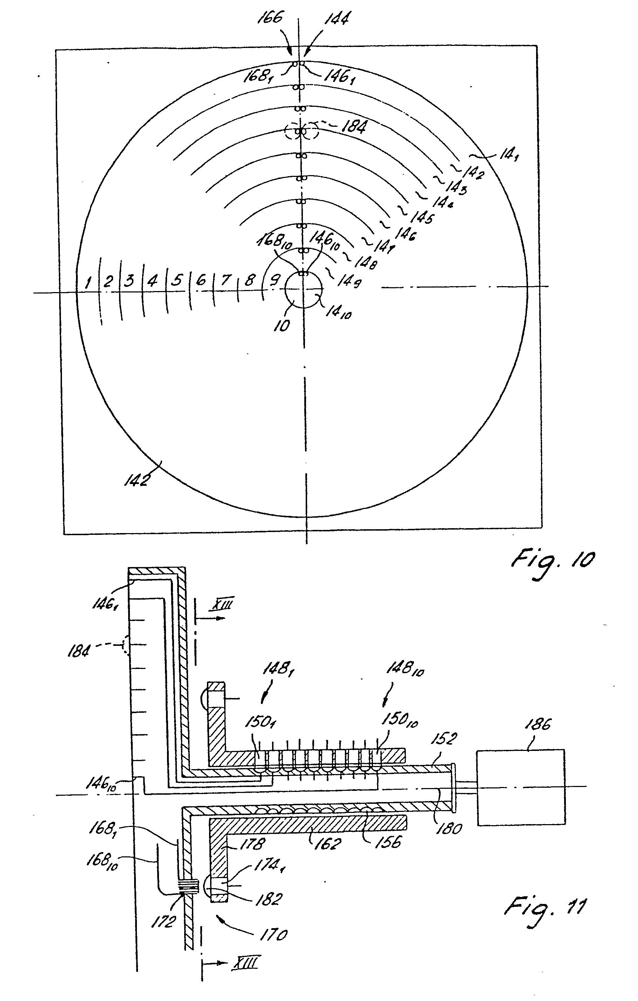

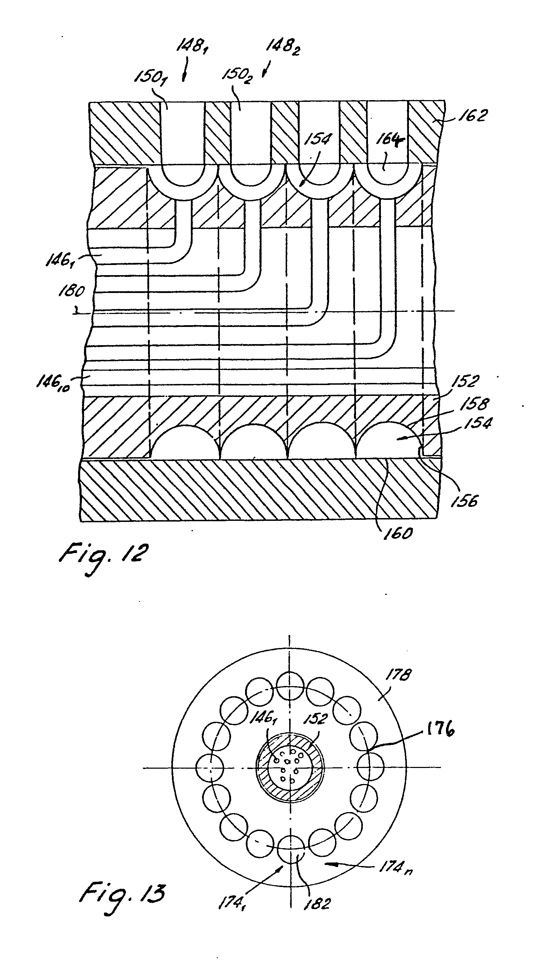

Die Fig. 10 bis 13 zeigen eine besonders vorteilhafte Zielscheibeneinrichtung zum simulierten Schiessen mit einer Schussimpulse abgebenden Waffe. Diese Zielscheibeneinrichtung enthält wiederum ein scheibenförmiges Umlauforgan 142, welches Zielscheibenringe $14_1$ bis $14_{10}$ aufge- druckt enthält. Weiter weist das Umlauforgan 142 einen Empfänger 144 einer ersten Ermittlungsvorrichtung für getroffene Zielscheibenringe auf. Dieser Empfänger 144 enthält längs eines Radialstrahles der Zielscheibe in der Zielbildebene mün- dende Lichtleiter $146_1$ bis $146_{10}$, die mit Übertra- gungsvorrichtungen $148_1$ bis $148_{10}$ verbunden sind, welche das Lichtsignal zu ortsfesten Emp- fangselementen $150_1$ bis $150_{10}$, beispielsweise Fo- totransistoren, leiten. Hierzu ist das scheibenförmige Umlauforgan 142 an einer Hohlwelle 152 angeordnet, in der die Lichtleiter $146_1$ bis $146_{10}$ zu den Übertragungsvorrichtungen $148_1$ bis $148_{10}$ ge- führt sind. Die Übertragungsvorrichtungen beste- hen jeweils aus einem Ringraum 154, der einerseits durch eine in der Hohlwelle 152 angeordnete Ringnut 156 mit im Querschnitt bogenförmigem Nutengrund 158 und andererseits durch die Innenfläche 160 des Lagers 162 gebildet wird. Die Wände des Ringraumes 154 sind spiegelnd ausgestaltet, vorzugsweise sind sie verchromt. Das in den Ringraum 154 über einen Lichtleiter $146_1$ bis $146_{10}$ eingebrachte Lichtsignal wird durch Spiegelung an das ortsfeste Empfangselement $150_1$ bis $150_{10}$ weitergeleitet und gewährleistet dadurch eine sichere Übertragung an das Empfangselement auch dann, wenn die Mündung des Lichtleiters bezüglich des Empfangselementes eine um 180° versetzte Stellung einnimmt. Die Wände der Ringnuten 156 in der Hohlwelle 152 sind bis an die Innenfläche 160 des Lagers 162 gezogen, um einen Austausch von Lichtsignalen zwischen be- nachbarten Ringräumen zu verhindern. Gegebe- nenfalls kann eine zusätzliche, nicht dargestellte Dichtung vorhanden sein, um die gegenseitige Abschirmung der Ringräume weiter zu verbes- sern. Die Empfangselemente $150_1$ bis $150_{10}$ enthal- ten zweckmässigerweise jeweils eine vorgesetzte Sammellinse 164, wodurch das Erfassen des im Ringraum 154 gespiegelten Lichtsignals verbessert werden kann.

Die Zielscheibeneinrichtung weist eine zweite Ermittlungsvorrichtung auf, um getroffene Zielscheibensektoren zu ermitteln. Sie enthält ebenfalls einen umlaufenden Empfänger 166, der längs des Radialstrahles des ersten Empfängers 144 mündende Lichtleiter $168_1$ bis $168_{10}$ aufweist. Die- se münden, wie die ersten Lichtleiter $146_1$ bis $146_{10}$ in der Zielscheibenebene des Umlauforganes 142. Die Mündungen der Lichtleiter $146_1$ bis $146_{10}$ und $168_1$ bis $168_{10}$ sind paarweise angeordnet und liegen möglichst dicht nebeneinander. Die Paare können entweder in Umfangsrichtung oder in Richtung des Radialstreifens nebeneinander angeordnet sein. Die Lichtleiter $168_1$ bis $168_{10}$ verlaufen im Umlauforgan 142 zu einer zweiten Übertragungsvorrichtung 170, an der sie zu einem Bündel 172 zusammengefasst sind. Das Bündel 172 wirkt nacheinander mit ortsfesten Empfangselementen $174_1$ bis $174_n$ zusammen, die längs eines Kreises 176 an einem ortsfesten Flansch 178 angeordnet sind. Die Anzahl n der ortsfesten Empfangselemente richtet sich nach der Anzahl der Zielscheibensektoren, die überwacht werden sollen. Wird nun eine Grobeinteilung gewünscht, so sind entsprechend weniger Empfangselemente vorhanden, als bei einer Feineinteilung, die entsprechend viele Empfangselemente erfordert. Wesentlich ist jedoch, dass die Empfangselemente $174_1$ bis $174_n$ eine fortlaufende Überwachung der Zielscheibensektoren ermöglicht. Bei wenigen Empfangselementen müssen diese nahe der Rotationsachse 180 angeordnet sein, während bei vielen Empfangselementen ein entsprechend grösserer Abstand von der Rotationsachse 180 einzuhalten ist, um diese am ortsfesten Flansch 178 unterzubringen. Der Empfangsbereich der Empfangselemente $174_1$ bis $174_n$ wird durch eine vorgeschaltete Sammellinse 182 vergrössert. Das Lichtsignal eines beliebigen Lichtleiters $168_1$ bis $168_{10}$ reicht aus, um ein Empfangselement $174_1$ bis $174_n$ zu aktivieren.

Im gezeigten Ausführungsbeispiel sind pro Zielscheibenring ein Paar Lichtleiter $146_1$ bis $146_{10}$, $168_1$ bis $168_{10}$ der beiden Ermittlungsvorrichtungen angeordnet. Um den Überwachungsbereich zu vergrössern, können entweder weitere Lichtleiterpaare in den Zwischenbereichen angeordnet sein oder die Lichtleiter können mit vorgesetzten Sammellinsen 184 ausgestattet werden, wie dies in Fig. 10 und Fig. 11 angedeutet ist. Um den Einfluss von Fremdlicht auszuschalten, kann ein nicht dargestelltes Interferenzfilter vorgesehen werden, das zweckmässigerweise am Eingang der Lichtleiter $146_1$ bis $146_{10}$ und $168_1$ bis $168_{10}$ angeordnet ist.

Ein Antriebsmotor 186 dient zum Antrieb des Umlauforganes 142.

Die Auswertung der durch die Schussimpulse erzeugten Lichtsignale kann in der bereits anhand der obigen Ausführungsbeispiele beschriebenen Weise erfolgen.

Der wesentliche Vorteil der in den Fig. 10 bis 13 beschriebenen Zielscheibeneinrichtung liegt darin, dass ähnlich dem Ausführungsbeispiel der Fig. 6 eine berührungslose Abtastung der Lichtsignale vom Umlauforgan an einen ortsfesten Teil möglich ist, ohne elektrische Energie in das Umlauforgan einspeisen zu müssen. Im Gegensatz zur Ausbildung der Zielscheibeneinrichtung der Fig. 6 ist jene der Fig. 10 bis 13 einfacher und sicherer gegen den Einfluss von Fremdlicht.

Die Übertragungsvorrichtungen $150_1$ bis $150_{10}$ sind von grundsätzlicher Bedeutung und eignen sich auch für andere Anwendungsbereiche der Technik, in denen zwischen einem rotierenden und einem feststehenden Teil Lichtsignale übertragen werden sollen.

## Patentansprüche

1. Zielscheibeneinrichtung zum simulierten Schiessen mit einer Schussimpulse abgebenden Waffe, mit einer ersten Vorrichtung zur Ermittlung getroffener Zielscheibenringe, welche Vorrichtung einen an einem Umlauforgan umlaufenden, Empfangselemente für die Zielscheibenringe enthaltenden Empfänger aufweist, und mit einer zweiten Vorrichtung zur Ermittlung getroffener Zielscheibensektoren, wobei die Ermittlungsvorrichtungen über ein Auswertgerät miteinander und mit einem Trefferanzeigegerät verbunden sind, dadurch gekennzeichnet, dass die Umlaufzeit des Empfängers (16, 62, 104, 144) gleich der oder kleiner als die Schussimpulsdauer ist und dass die zweite Ermittlungsvorrichtung am Umlauforgan (12, 58, 66, 106, 128, 142) der ersten Ermittlungsvorrichtung angeordnete Signalmittel (44, 72, 126, 130, $168_1$ bis $168_{10}$, 172) aufweist, die mit ortsfesten Signallesemitteln ($48_1$ bis $48_8$, $76_1$ bis $76_8$, $124_1$ bis $124_8$, 132, $174_1$ bis $174_8$) zusammenwirken, welche die jeweilige Sektorstellung des Empfängers (16, 62, 104, 144) des Umlauforgans ermitteln.

2. Zielscheibeneinrichtung nach Anspruch 1, dadurch gekennzeichnet, dass die Signalmittel und die Signallesemittel als Kondensatorplatten (44, $48_1$ bis $48_8$) ausgebildet sind.

3. Zielscheibeneinrichtung nach Anspruch 1, dadurch gekennzeichnet, dass die zweite Ermittlungsvorrichtung als Signalmittel am Umlauforgan (128) eine der Anzahl der zu erfassenden Zielscheibensektoren entsprechende Zahl Sender (130) für Sektorsignale und als Signallesemittel einen ortsfesten Empfänger (132) aufweist, der mit einem am Ende jeder Umdrehung des Umlauforganes gelöschten Zählwerk (134), vorzugsweise Schieberegister, verbunden ist, dessen Zählung durch ein Ringsignal unterbrochen wird.

4. Zielscheibeneinrichtung nach Anspruch 1, dadurch gekennzeichnet, dass die zweite Ermittlungsvorrichtung als Signalmittel einen am Umlauforgan (58) angeordneten Sender (72) aufweist, der nacheinander mit einer der Zahl und der Lage der zu erfassenden Zielscheibensektoren entsprechenden Anzahl ortsfester als Empfänger (76) ausgebildeter Signallesemittel zusammenwirkt.

5. Zielscheibeneinrichtung nach Anspruch 1, dadurch gekennzeichnet, dass die erste Ermittlungsvorrichtung als Signalmittel jeweils Empfänger (166) mit Lichtleitern ($168_1$ bis $168_{10}$) aufweisen, die im Umlauforgan (142) angeordnet sind und einerseits längs eines Radialstrahles in der Zielscheibenebene münden und andererseits zu einem Bündel (172) zusammengefasst sind, welches nacheinander mit längs eines Kreises (176) angeordneten ortsfesten als Empfangselemente ($174_1$ bis $174_n$) ausgebildeten Signallesemitteln

zusammenwirkt, denen vorzugsweise eine Sammellinse (182) vorgeschaltet ist.

6. Zielscheibeneinrichtung nach Anspruch 1, dadurch gekennzeichnet, dass der Empfänger (104) der ersten Ermittlungsvorrichtung einen um 45° zur Zielscheibenachse (108) geneigten und um diese rotierenden Spiegelstreifen (106) aufweist, um Schussimpulse auf längs der Zielscheibenachse (108) angeordnete Empfangselemente ($116_1$ bis $116_9$) umzulenken.

7. Zielscheibeneinrichtung nach Anspruch 1, dadurch gekennzeichnet, dass die erste Ermittlungsvorrichtung eine im Umlauforgan (58) angeordnete Kodiervorrichtung (66) für die zu übertragenden Signale aufweist.

8. Zielscheibeneinrichtung nach Anspruch 1, dadurch gekennzeichnet, dass die erste Ermittlungsvorrichtung einen im Umlauforgan (58) angeordneten Speicher (70) für die zu übertragenden Signale aufweist, der am Ende eines Umlaufes gelöscht wird.

9. Zielscheibeneinrichtung nach Anspruch 1, dadurch gekennzeichnet, dass zwischen dem rotierenden, vorzugsweise scheibenförmigen Umlauforgan (12, 58, 106, 128, 136, 142) und einem ortsfesten Element ($36_1$ bis $36_{10}$, $48_1$ bis $48_8$, 74, $116_1$ bis $116_{10}$, $124_1$ bis $124_8$, 132, 140, 162, 178) eine kontaktlose Übertragungsvorrichtung für Signale angeordnet ist.

10. Zielscheibeneinrichtung nach Anspruch 9, dadurch gekennzeichnet, dass die Übertragungsvorrichtung ($68_1$ bis $68_4$) mindestens einen am Umlauforgan (58) angeordneten Sender ($82_1$ bis $82_4$) und mindestens einen am ortsfesten Element (74) angeordneten Empfänger ($84_1$ bis $84_4$) aufweist.

11. Zielscheibeneinrichtung nach Anspruch 9, dadurch gekennzeichnet, dass die Übertragungsvorrichtung ($32_1$ bis $32_{10}$) mindestens eine am Umlauforgan (12) angeordnete mitrotierende Kondensatorplatte ($34_1$ bis $34_{10}$) aufweist, der eine ortsfeste Kondensatorplatte ($36_1$ bis $36_{10}$) zugeordnet ist.

12. Zielscheibeneinrichtung nach Anspruch 9, dadurch gekennzeichnet, dass die Übertragungsvorrichtung mindestens eine mit dem Umlauforgan (136) rotierende koaxial angeordnete Induktionsspule (138) aufweist, die mit einer koaxial angeordneten, ortsfesten Induktionsspule (140) zusammenwirkt.

13. Zielscheibeneinrichtung nach Anspruch 1, dadurch gekennzeichnet, dass die erste Ermittlungsvorrichtung jeweils Empfänger (144) mit Lichtleitern ($146_1$ bis $146_{10}$) aufweist, die einerseits längs eines Radialstrahles in der Zielscheibenebene eines Umlauforganes (142) münden und andererseits zu Übertragungsvorrichtungen ($148_1$ bis $148_{10}$) zwischen dem rotierenden Umlauforgan (142) und einem ortsfesten Teil (162) führen, an dem Empfangselemente ($150_1$ bis $150_{10}$) angeordnet sind.

14. Zielscheibeneinrichtung nach den Ansprüchen 5 und 13, dadurch gekennzeichnet, dass Lichtleiter ($146_1$ bis $146_{10}$, $168_1$ bis $168_{10}$) der ersten und der zweiten Ermittlungsvorrichtung jeweils paarweise längs eines Radialstrahles in der Zielscheibenebene des Umlauforganes (142) münden.

15. Zielscheibeneinrichtung nach Anspruch 13, dadurch gekennzeichnet, dass die Lichtleiter ($146_1$ bis $146_{10}$) der ersten Ermittlungsvorrichtung an den Übertragungsvorrichtungen ($148_1$ bis $148_{10}$) jeweils radial am Umfang einer Welle (152) des Umlauforganes (142) in einen spiegelnden, vorzugsweise verchromten Ringraum (154) münden, den ein ortsfestes Empfangselement ($150_1$ bis $150_{10}$) überwacht, welchem vorzugsweise eine Sammellinse (164) vorgeschaltet ist.

16. Zielscheibeneinrichtung nach Anspruch 15, dadurch gekennzeichnet, dass der Ringraum (154) durch eine in der Welle (152) angeordnete Ringnut (156), vorzugsweise mit im Querschnitt bogenförmigem Nutengrund (158) gebildet ist.

17. Zielscheibeneinrichtung nach Anspruch 5 und/oder 13, dadurch gekennzeichnet, dass an der Mündung der Lichtleiter ($146_1$ bis $146_{10}$, $168_1$ bis $168_{10}$) in der Zielscheibenebene des Umlauforganes (142) jeweils eine Sammellinse (184) angeordnet ist.

## Claims

1. A target device for simulated firing with a weapon which emits shooting pulses comprising a first detection device for detecting target rings which have been hit, said first detecting device comprises a revolving member with a receiver containing receiver elements for the target rings, and a second detecting device for detecting target sectors which have been hit, whereby the first and the second detecting devices are mutually connected with one another by means of an evaluation device and a hit-indicator device, characterized in that said receiver (16, 62, 104, 144) has a period of revolution being the same as or less than the duration of the firing pulse and that the second detecting device comprises signaling devices (44, 72, 126, 130, $168_1$ to $168_{10}$, 172) being located at the revolving member (12, 58, 66, 106, 128, 142) of the first detecting device interacting with stationary means for reading signals ($48_1$ to $48_8$, $76_1$ to $76_8$, $124_1$ to $124_8$, 132, $174_1$ to $174_8$) which evaluate the actual position of the receiver (16, 62, 104, 144) of the revolving member.

2. A target device according to claim 1, characterized in that said signaling devices and said means for reading said signals are condensator plates (44, $48_1$ to $48_8$).

3. A target device according to claim 1, characterized in that the second detecting device comprises, as signaling devices, a number of transmitters for the sector signals locates at the revolving member (128) corresponding to the number of target sectors to be detected and, as means for reading said signals, a stationary receiver (132) with which a counter (134), preferably a shift register, is connected being reset at the end of each revolution of the revolving member and wherein a ring signal interrupts counting.

4. A target device according to claim 1, characterized in that the second detecting device comprises, as signaling device, a transmitter (72), located at the revolving member (58), which subsequently interacts with a number of stationary signaling devices, adapted as receivers (76), corresponding to the number and the positition of the target sectors.

5. A target device according to claim 1, characterized in that the first detecting device comprises, as signaling devices, receivers (166) containing light-conductors ($168_1$ to $168_{10}$) located at the revolving member (142) and, on the one hand, ending along a radial ray in the target plane and, on the other hand, are combined for forming a bundle (172) which subsequently interacts with stationary receiver elements ($174_1$ to $174_n$), adapted as means for reading signals, arranged along a circle (176) and a collecting lens (182) preferably placed forwardly of said stationary receiver elements.

6. A target device according to claim 1, characterized in that the receiver (104) of the first detecting device comprises a revolving mirror strip (106) inclined at an angle of 45° with respect to the target axis (108), said mirror (106) serving for deflection of incoming shooting pulses towards receiving elements ($116_1$ to $116_9$) arranged along the target axis (108).

7. A target device according to claim 1, characterized in that the first detecting device comprises a coding device (66), located at the revolving member (58), for the signals to be transmitted.

8. A target device according to claim 1, characterized in that the first detecting device comprises a memory (70), located at the revolving member (58), for the signals to be transmitted and which memory is cleared at the end of a revolution of said revolving member.

9. A target device according to claim 1, characterized in that a contactless transmitter device for the signals is provided, said transmitter device being arranged between the, preferably disc shaped, revolving member (12, 58, 106, 128, 136, 142) and a stationary element ($36_1$ to $36_{10}$, $48_1$ to $48_8$, 74, $116_1$ to $116_{10}$, $124_1$ to $124_8$, 132, 140, 162, 178).

10. A target device according to claim 9, characterized in that the transmitter device ($68_1$ to $68_4$) comprises at least one transmitter ($82_1$ to $82_4$), located at the revolving member (58), and at least one receiver ($84_1$ to $84_4$), located at the stationary element (74).

11. A target device according to claim 9, characterized in that the transmitter device ($32_1$ to $32_{10}$) comprises at least one capacitor plate ($34_1$ to $34_{10}$) located at the revolving member (12) and rotatable therewith and a stationary capacitor plate ($36_1$ to $36_{10}$) operatively associated with said at least one rotatable capacitor plate.

12. A target device according to claim 9, characterized in that the transmitter device comprises at least one coaxially arranged induction coil (138) rotating with the revolving member (136) and cooperating with at least one stationary induction coil (140) coaxially arranged with respect to said rotating induction coil.

13. A target device according to claim 1, characterized in that the first detecting device comprises receivers (144) containing light-conductors ($146_1$ to $146_{10}$) ending, on the one hand, along a radial ray in the target plane of a revolving member (142) and, on the other hand, leading to transmitter devices ($148_1$ to $148_{10}$) arranged between the rotary revolving member (142) and a stationary part (162) provided with receiving elements ($150_1$ to $150_{10}$).

14. A target device according to claims 5 and 13, characterized in that each of the light-conductors ($146_1$ to $146_{10}$, $168_1$ to $168_{10}$) of the first and the second detecting device are ending in pairs along a radial ray in the target plane of the revolving member (142).

15. A target device according to claim 13, characterized in that each of the light conductors ($146_1$ to $146_{10}$) of the first detecting device are ending radially on the circumference of a shaft (152) of the revolving member (142) in a reflecting, preferably chromium-plated, annular space (154) at the transmitter devices ($148_1$ to $148_{10}$), said annular space being monitored by a stationary receiving element ($150_1$ to $150_{10}$) forwardly of which a collecting lens (164) is preferably arranged.

16. A target device according to claim 15, characterized in that the annular space (154) is formed by an annular groove (156), preferably including a groove base (158) with an arcuate cross-section, provided in the shaft (152).

17. A target device according to claims 5 and/or 13, characterized in that a collecting lens (184) is disposed at the end of each of the light-conductors ($146_1$ to $146_{10}$, $168_1$ to $168_{10}$) in the target plane of the revolving member (142).

## Revendications

1. Installation de panneau de but pour tirs simulés avec une arme délivrant des impulsions de coups tirés, avec un premier dispositif pour détecter l'anneau de panneau de but touché, dispositif présentant un récepteur, contenant des éléments de réception pour les anneaux du panneau de but, tournants sur un organe rotatif, et un second dispositif pour détecter les secteurs du panneau de but touchés, ces dispositifs détecteurs étant reliés entre eux par l'intemédiaire d'un appareil d'exploitation de données, et reliés à un appareil indicateur des impacts de tir, installation caractérisée en ce que la durée de révolution de récepteur (16, 62, 104, 144) est égale ou inférieure à la durée de l'impulsion de coup, et le second dispositif détecteur présente des moyens émetteurs de signal (44, 72, 126, 130, $168_1$ à $168_{10}$, 172) disposés sur l'organe rotatif (18, 58, 66, 106, 128, 142) du premier dispositif détecteur, ces moyens coopérant avec des moyens de lecture de signal fixes ($48_1$ à $48_8$, $76_1$ à $76_8$, $124_1$ à $124_8$, 132, $174_1$ à $174_8$) lesquels font connaître, à chaque tir, la position de secteur du récepteur (16, 62, 104, 144) intéressé de l'organe rotatif.

2. Installation suivant la revendication 1, caractérisée en ce que les moyens émetteurs de signal et les moyens de lecture de signal sont constitués par des plaques de condensateur (44, $48_1$ à $48_8$).

3. Installation suivant la revendication 1, caractérisée en ce que le second dispositif détecteur présente, comme moyens émetteurs de signal, sur l'organe rotatif (128), un nombre d'émetteurs (130) de signaux de secteur correspondant au nombre de secteurs du panneau de but à détecter, et, comme moyens de lecture de signal, un récepteur à poste fixe (132) qui est relié à un mécanisme de comptage (134), par exemple un registre à décalage, qui s'efface à chaque révolution de l'organe rotatif, et dont le comptage est interrompu par un signal d'anneau.

4. Installation suivant la revendication 1, caractérisée en ce que le second dispositif détecteur présente, comme moyens d'émission de signal, un émetteur (72) disposé sur l'organe rotatif (58), lequel coopère ensuite avec des moyens de lecture de signal, correspondant en nombre et en position, aux secteurs de panneau de but à contrôler, et constitués comme des récepteurs à poste fixe (76).

5. Installation suivant la revendication 1, caractérisée en ce que le premier dispositif détecteur présente, comme moyens de signal, des récepteurs (166) avec conducteurs lumineux ($168_1$ à $168_{10}$) qui sont disposés sur l'organe rotatif, et qui, d'une part, débouchent le long d'un rayonnement radial dans le plan du panneau de but, et qui, d'autre part, sont groupés en un faisceau qui coopère successivement avec des moyens de lecture de signal disposés à poste fixe le long d'une circonférence (176), constitués comme des éléments récepteurs, et en amont desquels est montée, par exemple, une lentille collectrice (182).

6. Installation suivant la revendication 1, caractérisée en ce que le récepteur (104) du premier dispositif détecteur présente une bande de miroir (106), inclinée à 45 degrés par rapport à l'axe du panneau de but (108), et rotative autour de celui-ci, en vue de faire dévrier les impulsions de tir vers des éléments récepteurs ($116_1$ à $116_9$) disposés le long de l'axe du panneau de but (108).

7. Installation suivant la revendication 1, caractérisée en ce que le premier dispositif détecteur présente un dispositif de codage (66) pour les signaux à transmettre, disposé sur l'organe rotatif (58).

8. Installation suivant la revendication 1, caractérisée en ce que le premier dispositif détecteur présente une mémoire (70) pour les signaux à transmettre, qui s'efface à la fin d'une révolution.

9. Installation suivant la revendication 1, caractérisée en ce que, entre l'organe rotatif (12, 58, 106, 128, 136, 142), par exemple en forme de disque, et un élément placé à poste fixe ($36_1$ à $36_{10}$, $48_1$ à $48_8$, 74, $116_1$ à $116_{10}$, $124_1$ à $124_8$, 132, 140, 162, 178), est prévu un dispositif sans contact de transmission pour les signaux.

10. Installation suivant la revendication 9, caractérisée en ce que le dispositif de transmission ($68_1$ à $68_4$) présente au moins un émetteur ($82_1$ à $82_4$) disposé sur l'organe rotatif (58), et au moins un récepteur ($84_1$ à $84_4$) disposé sur l'élément à poste fixe (74).

11. Installation suivant la revendication 9, caractérisée en ce que le dispositif de transmission ($32_1$ à $32_{10}$) présente au moins une plaque de condensateur ($34_1$ à $34_{10}$) disposée sur l'organe rotatif (12), entraînée en rotation avec lui, et à laquelle est affectée une autre plaque de condensateur à poste fixe ($36_1$ à $36_{10}$).

12. Installation suivant la revendication 9, caractérisée en ce que le dispositif de transmission présente au moins une bobine d'induction (138) coaxiale à l'organe rotatif (136) et tournant avec lui, qui coopère avec une bobine d'induction (140) à poste fixe, coaxiale.

13. Installation suivant la revendication 1, caractérisée en ce que le premier dispositif détecteur présente des récepteurs respectifs (144) avec conducteurs lumineux ($146_1$ à $146_{10}$) qui, d'une part, débouchent le long d'un rayonnement radial dans le plan de panneau de but d'un organe rotatif (142) et qui, d'autre part, conduisent à des dispositifs de transmission ($148_1$ à $148_{10}$), entre l'organe rotatif (142) et une pièce à poste fixe (162) sur laquelle sont disposés des éléments récepteurs ($150_1$ à $150_{10}$).

14. Installation suivant les revendications 5 et 13, caractérisée en ce que des conducteurs lumineux ($146_1$ à $146_{10}$, $168_1$ à $168_{10}$) du premier et du second dispositif détecteur débouche, par paires, le long d'un rayonnement radial dans le plan du panneau de but de l'organe rotatif (142).

15. Installation suivant la revendication 13, caractérisée en ce que les conducteurs lumineux ($146_1$ à $146_{10}$) du premier dispositif détecteur débouchent dans les dispositifs de transmission ($148_1$ à $148_{10}$), chacun, radialement au pourtour d'un arbre (152) de l'organe rotatif (142) dans une chambre annulaire (154) formant miroir, par exemple chromée, qui est surveillée par un élément récepteur à poste fixe ($150_1$ à $150_{10}$) devant lequel est montée, par exemple, une lentille collectrice (164).

16. Installation suivant la revendication 15, caractérisée en ce que la chambre annulaire (154) est formée par une gorge annulaire (156) disposée dans l'arbre (152) et formée, par exemple, d'un fond de gorge (158) à section en forme d'arc de cercle.

17. Installation suivant l'une quelconque des revendications 5 et/ou 13, caractérisée en ce que, à l'embouchure de chacun des conducteurs lumineux ($146_1$ à $146_{10}$, $168_1$ à $168_{10}$) est disposée une lentille collectrice (184) dans le plan du panneau de but et l'organe rotatif (142).

0007290

Fig. 1

Fig. 2

11

Fig. 3

Fig. 4

0007290

13

Fig. 5

Fig. 7

Fig. 8

0007290

15

Fig. 6

Fig. 9

0007290

Fig. 10

Fig. 11

19

Fig. 12

Fig. 13